# EUROPEAN PATENT SPECIFICATION

(11) **EP 0 318 616 B1**
(45) Date of publication and mention of the grant of the patent: **16.03.1994**
(21) Application number: 87310660.3
(22) Date of filing: 03.12.1987
(51) Int. Cl.: C08J 5/10

(54) **Fiber-reinforced composite materials and resin composition therefor**
Faserverstärkte Verbundmaterialien und Harzzusammensetzung dafür
Matériaux composites renforcés par des fibres et composition de résine pour ceux-ci

(43) Date of publication of application: 07.06.1989
(73) Proprietor: Tonen Corporation, Tokyo (JP)
(72) Inventor: Murakami, Shinkichi, Oi-machi Iruma-gun Saitama-ken (JP); Miyazaki, Makoto, Sakado-shi Saitama-ken (JP); Inoue, Hiroshi, Miyoshi-machi Iruma-gun Saitama-ken (JP); Takezawa, Makoto, Niiza-shi Saitama-ken (JP); Ishida, Yuzi, Ota-ku Tokyo (JP)
(74) Representative: Harvey, David Gareth

(56) References cited:
- EP-A- 0 009 761
- US-A- 3 448 172
- US-A- 3 943 090
- US-A- 4 390 662

## Description

This invention relates generally to fiber-reinforced composite materials for pultrusion.

The invention is described herein mostly as embodied in carbon fiber-reinforced composite materials, but it is to be understood that the description is for the purpose of illustration only and is not limitative. Reinforcing fibers other than carbon fibers can be used instead, therefore.

In recent years many different fiber-reinforced composite materials have found wide-spread use in diverse fields including aviation, aerospace, land transportation, ship-building, construction and building, civil engineering, and in the manufacture of industrial parts, acoustic appliances, agricultural and fishing supplies, and sporting goods.

The introduction of "super" reinforcing fibers, notably carbon and aramid fibers, has brought striking improvements in strength to fiber-reinforced composite materials despite remarkable reduction in weight. Among resins that form the matrices of these fiber-reinforced composite materials, epoxy resin is the most often used because of its adhesion, or the strength it imparts to the reinforcing fiber, or because of the thermal resistance it contributes in the case of the carbon fiber-reinforced composite materials. The use of epoxy resin as a matrix resin, however, presents problems of inadequate waterproofness, flexibility and impact resistance, as well as high cost.

More recently, unsaturated polyester resin has drawn attention as a possible matrix resin with cost and moldability advantages. Nevertheless, its insufficient strength and inadequate adhesion to carbon and aramid fibers have kept it from coming into practical use.

We have conducted researches and experiments aimed at overcoming the afore-described problems of the prior art fiber-reinforced composite materials. As a result, it has now been found that the fiber-reinforced composite materials for pultrusion can be made much stronger, more easily moldable, and less costly by the use, as a matrix resin, of a resin composition obtained by mixing an unsaturated polyester resin with a urethane acrylate resin.

EP-A-0 009 761 discloses a fiber-reinforced composite material comprising a reinforcing fiber and a matrix resin which is a mixture of an unsaturated polyester resin and a polyurethane resin, i.e. a urethane acrylate resin. The composite material is a sheet molding compound (SMC) in the form of resin mats, and is obtained by putting reinforcing fibers impregnated with a matrix resin into a heated mold to form the resin-impregnated fibers into a given size and shape and then curing the thus formed fiber-reinforced product.

In order to produce a composite material such as SMC, the matrix resin must have a higher viscosity than that of a matrix resin usable in the pultrusion process.

US-A-4,390,662 discloses a fiber-reinforced composite material comprising a reinforcing fiber and a matrix resin which is a mixture of an unsaturated polyester resin and a urethane acrylate resin. However, the Examples are confined to SMC, and therefore the urethane acrylate of US-A-4,390,662 are considered to have a viscosity improper for the pultrusion process.

The present invention, however, aims to secure improvements specifically in the field of pultrusion.

The present invention is use as a pultrusion material of a fiber-reinforced composite comprising a reinforcing fiber and a matrix resin, said matrix resin being a resin composition obtained by mixing an unsaturated polyester resin with a urethane acrylate resin, the latter being present in an amount of not less than 2% by weight and not more than 50% by weight, of the resin composition.

The invention will now be explained in more detail by way of example.

According to our researches, the reinforcing fiber and matrix resin in a fiber-reinforced composite material are presumably bound together by the interaction between the polar functional groups given to the surface of the reinforcing fiber by usual surface treatment and the polar groups of the matrix resin. It follows that a desirable matrix resin is one having groups of large polarity in the molecular framework or branch chains to produce a greater interaction with the surface of the reinforcing fiber. The resins that meet this requirement include urethane acrylate and epoxy resins. However, the fiber-reinforced composite materials using such a resin alone as the matrix resin pose the problems already pointed out.

We have tried to use as a matrix resin the resin mixture consisting of such a resin showing good adhesion to a given reinforcing fiber and an additional resin which is inferior in adhesion to the fiber but is excellent in other properties, such as moldability, surface quality, and impact resistance. The result has led to the obtainment of a fiber-reinforced composite material far superior in strength and other mechanical properties to the existing ones using such resins singly. Although the mechanism for this surprising effect is yet to be clarified, the following reasoning may apply. According to the present invention, the resin (B) that has polar groups in the molecular framework is allowed, in preference to the resin (A) that does not have sufficient polar groups, to interact with the reinforcing fiber. Consequently, there is formed a layer rich with the resin (B) in the interface between the reinforcing fiber and the matrix resin, from which the resin (B) presumably decreases gradually. Thus, by the invention, the abundance of the resin (B) in the interface between the reinforcing fiber and the matrix resin provides a high degree of bond between the two and ensures great interlaminar strength of the composite material. The resin (A), on the other hand, is non-existent, or only present in small amount, along the boundary between the reinforcing fiber and the matrix. The resins (A) and (B) are compatible with each other and form an interpenetration polymer network (IPN). This structure provides such a strong bond that both resins may be macroscopically looked at as a single matrix resin. It appears unlikely that mixing the two different resins forms a matrix resin with inferior physical properties.

As described above, according to the present invention the resin (A) is a radically polymerizable resin with or without the addition of at least one of shrinkproofing agents, fillers, pigments, or internal mold release agents, and the resin (B) is a radically polymerizable resin more adherent to the reinforcing fiber than the resin (A) is.

To be more specific, the radically polymerizable resin to be used as the resin (A) is an unsaturated polyester resin and the radically polymerizable resin to be used as the resin (B) is a urethane acrylate resin, and may contain styrene monomer.

The resin (B) is added in an amount of 2% or more, preferably 5% or more, by weight of the composition.

The resin (A) may contain at least one of shrinkproofing agents, fillers, and internal mold release agents. For example, suitable shrinkproofing agents are polyacrylate, polyvinyl acetate, polyvinyl chloride, polyethylene, saturated polyester-polycaprolactam, cellulose acetate butylate, and SBS. Examples of desirable fillers are calcium carbonate, powdered silica, barium sulfate, clay, asbestos, mica, and talc. Suitable internal mold release agents include metal salts of stearic acid, organic phosphates, lecithin, and natural waxes. Even with the addition of such a shrinkproofing agent under the invention, the resin (A) can improve the surface smoothness of the resulting composite material. The invention thus renders it possible to use not only unsaturated polyester resin but also other radically polymerizable resins hitherto deemed unemployable as matrix resins when they contain a shrinkproofing agent to improve the surface smoothness of the composite materials.

Although various reinforcing fibers are employed as the reinforcement, preferably the reinforcing fiber may be a carbon, aramid, boron, silicon carbide, alumina, glass, or metal fiber or whiskers.

The resin (A) is an unsaturated polyester resin, and for the resin (B) a urethane acrylate resin is chosen. Our investigations about the mixing ratio of the resins (A) and (B) have shown that the larger the percentage of the resin (B), the greater the strength, but the need of maintaining thickening properties will limit the percentage of the resin (B) to up to or at most 50%, preferably 5 to 40%, more preferably 10 to 30%.

As for the thickening agent, a commonly used metallic oxide or metallic hydroxide, e.g. MgO or Mg(OH)₂, or an isocyanate is chosen.

The invention will now be described further with with reference to the following example.

### Example

A carbon fiber 9 µm in diameter and coated with an epoxy resin sizing agent, in the form of strands (strength, 350 kg/mm² and modulus of elasticity, 32 t/mm²) was used as a reinforcing fiber. A slightly shrinkable unsaturated polyester resin ("Upica 3510" made by Japan Upica Co.) (an unsaturated polyester resin with the addition of a shrinkproofing agent) was employed as a resin (A) inadequately adherent to the reinforcing fiber. An urethane acrylate resin ("Upica 8921" made by Japan Upica Co.) was employed as a resin (B) adequately adherent to the fiber.

The resins (A) and (B) were used in varied proportions. The slightly shrinkable unsaturated polyester resin [resin (A)] and the urethane acrylate resin [resin (B)] were mixed in different weight ratios of 75/25, 50/50, 25/75 and 0/100.

To each of the resin mixtures thus obtained were added, as polymerization initiators, 0.6 phr of bis-4-t-butylcyclohexylperoxybenzoate ("Percadox 16" made by Kayaku-Nourie Co.) and 1.0 phr, in terms of the pure product, of BPO ("Cadox B-CH50" made by Kayaku-Nourie Co.). Each mixture was dissolved with stirring at room temperature to prepare a matrix resin. "phr" stands for parts per hundred parts of resin.

The dissolved matrix resin and the carbon fiber were mixed.

Composite materials were formed by pultrusion. To the matrix resin was added 1 phr of "Zelec UN" (trade name of a product by Du Pont de Nemours, E.I. & Co.) as an internal mold release agent. The carbon fiber content was 60% by volume, and the cross sectional contour of each molded product was 2 by 12.7 mm. The mold having an overall length of 60 cm was cooled only at the inlet with running water, and the temperature was controlled so that the rest of the mold was kept at 150°C. The pultrusion speed was 0.5 m/min. The ILSS values of the test specimens cut out of the moldings so formed were measured by the short beam technique, and the specimens were also tested for bending strength. The results are given in Table 1.

**Table 1**

| Slightly shrinkable unsaturated polyester/urethane acrylate resin | ILSS (kg/mm²) | Bending strength kg/mm² |
|---|---|---|
| 100/0 | 5.5 | 91 |
| 75/25 | 8.4 | 150 |
| 50/50 | 9.1 | 164 |
| 25/75 | 9.5 | 172 |
| 0/100 | 10.0 | 182 |

## Claims

1. Use as a pultrusion material of a fiber-reinforced composite comprising a reinforcing fiber and a matrix resin, said matrix resin being a resin composition obtained by mixing an unsaturated polyester resin with a urethane acrylate resin, the latter being present in an amount of not less than 2% by weight and not more than 50% by weight, of the resin composition.

2. The use according to claim 1, wherein the urethane acrylate resin is in an amount of 5% to 40% by weight of the resin composition, e.g. in an amount of 10 to 30% by weight.

3. The use according to claim 1 or 2, wherein the reinforcing fiber is a carbon, aramid, boron, silicon carbide, alumina, glass, or metal fiber or whisker.

4. The use according to claim 1, 2 or 3, wherein the matrix resin includes at least one of shrinkproofing agents, fillers, pigments, or internal mold release agents.

5. The use according to claim 1, 2 or 3, wherein the matrix contains styrene monomer.

6. The use according to any preceding claim, wherein said matrix resin includes a thickening agent such as a metallic oxide.

7. The use according to claim 6, wherein the thickening agent is MgO, a metallic hydroxide e.g. Mg(OH)₂, or an isocyanate.

## Patentansprüche

1. Verwendung eines faserverstärkten Verbundmaterials als ein Pultrusionsmaterial, wobei das Verbundmaterial eine Verstärkungsfaser und ein Matrixharz aufweist und das Matrixharz eine Harzzusammensetzung ist, die erhalten ist durch Vermischen eines ungesättigten Polyesterharzes mit einem Urethanacrylatharz, wobei letzteres in einer Menge von nicht weniger als 2 Gew.-% und nicht mehr als 50 Gew.-% der Harzzusammensetzung anwesend ist.

2. Verwendung nach Anspruch 1, wobei das Urethanacrylatharz in einer Menge von 5-40 Gew.-% der Harzzusammensetzung, z. B. in einer Menge von 10-30 Gew.-% vorhanden ist.

3. Verwendung nach Anspruch 1 oder 2, wobei die Verstärkungsfaser eine Kohlenstoff-, Aramid-, Bor-, Siliciumcarbid-, Aluminiumoxid-, Glas- oder Metallfaser oder -Whisker ist.

4. Verwendung nach Anspruch 1, 2 oder 3, wobei das Matrixharz mindestens eine der folgenden Substanzen aufweist: Schrumpffreimacher, Füllstoffe, Pigmente oder eingearbeitete Formentrennmittel.

5. Verwendung nach Anspruch 1, 2 oder 3, wobei die Matrix Monostyrol enthält.

6. Verwendung nach einem der vorhergehenden Ansprüche, wobei das Matrixharz ein Eindickungsmittel wie etwa ein metallisches Oxid aufweist.

7. Verwendung nach Anspruch 6, wobei das Eindickungsmittel MgO, ein metallisches Hydroxid wie beispielsweise Mg(OH)₂ oder ein Isocyanat ist.

## Revendications

1. Utilisation, comme matériau de pultrusion, d'un matériau composite renforcé de fibres, comprenant des fibres de renforcement et une résine de matrice, ladite résine de matrice étant une composition de résine obtenue en mélangeant une résine de polyester insaturé avec une résine d'acrylate d'uréthanne, cette dernière étant présente dans une proportion non inférieure à 2% en poids et non supérieure à 50% en poids de la composition de résine.

2. Utilisation selon la revendication 1, dans laquelle la résine d'acrylate d'uréthanne est présente dans une proportion de 5% à 40% en poids de la composition de résine, par exemple dans une proportion de 10 à 30% en poids.

3. Utilisation selon la revendication 1 ou 2, dans laquelle les fibres de renforcement sont des fibres de carbone, d'aramide, de bore, de carbure de silicium, d'alumine, de verre ou de métal ou des whiskers.

4. Utilisation selon l'une quelconque des revendications 1 à 3, dans laquelle la résine de matrice contient l'un au moins parmi des agents anti-retrait, des charges, des pigments ou des lubrifiants de moule internes.

5. Utilisation selon l'une quelconque des revendications 1 à 3, dans laquelle la matrice contient du styrène monomère.

6. Utilisation selon l'une quelconque des revendications 1 a 5, dans laquelle ladite resine de matrice contient un epaississant, tel qu'un oxyde métallique.

7. Utilisation selon la revendication 6, dans laquelle l'épaississant est MgO, un hydroxyde metallique, par exemple Mg(OH)₂, ou un isocyanate.
